# EUROPEAN PATENT SPECIFICATION

(11) **EP 4 316 741 B1**
(45) Date of publication and mention of the grant of the patent: **02.07.2025**
(21) Application number: 22849699.8
(22) Date of filing: 31.05.2022
(51) Int. Cl.: B25J 9/16, G01C 21/20, G01C 21/00, G05D 1/246, G05D 1/242, G05D 105/10, G05D 109/10, G05D 107/40

(54) **ROBOT AND CONTROL METHOD THEREFOR**
ROBOTER UND STEUERUNGSVERFAHREN DAFÜR
ROBOT ET PROCÉDÉ DE COMMANDE ASSOCIÉ

(30) Priority: 27.07.2021 KR 20210098806
(43) Date of publication of application: 07.02.2024
(73) Proprietor: Samsung Electronics Co., Ltd., Suwon-si, Gyeonggi-do 16677 (KR)
(72) Inventor: HAN, Seungbeom, Suwon-si Gyeonggi-do 16677 (KR); KIM, Jinwon, Suwon-si Gyeonggi-do 16677 (KR); OH, Keunchan, Suwon-si Gyeonggi-do 16677 (KR); BAIK, Aron, Suwon-si Gyeonggi-do 16677 (KR)
(74) Representative: Gulde & Partner
(86) International application number: PCT/KR2022/007730
(87) International publication number: WO 2023/008720

(56) References cited:
- WO-A1-2020/041817
- KR-A- 20120 043 096
- KR-A- 20210 009 011
- KR-B1- 101 083 394
- KR-B1- 101 468 545
- US-B2- 10 133 279
- "Springer tracts in advanced robotics", 9 June 2021, BERLIN ; HEIDELBERG ; NEW YORK : SPRINGER, 2003-, DE, ISSN: 1610-7438, article ABRATE FABRIZIO ET AL: "Multi-robot Map Updating in Dynamic Environments", pages: 147 - 160, XP093180505, DOI: 10.1007/978-3-642-32723-0_11
- J LEONARD ET AL: "Consistent, Convergent, and Constant-Time SLAM", INT. JOINT CONFERENCE ON ARTIFICIAL INTELLIGENCE, 1 January 2003 (2003-01-01), pages 1143 - 1150, XP055764858

## Description

### [Technical Field]

The disclosure relates to a robot managing map data, and a controlling method thereof.

### [Description of the Related Art]

Recently, development of technologies for robots that are arranged in indoor spaces and provide services to users is activity going on. In particular, a robot cleaning an indoor space can continuously update map data corresponding to the space while travelling in the indoor space.

In this case, the robot may simultaneously perform an operation of recognizing the location of the robot and an operation of acquiring map data of the space in the travelling process. However, a conventional robot had a problem that it acquired incorrect map data in case the location of the robot was not recognized correctly or there was an error in sensor data necessary for acquiring map data.

Accordingly, there is a continuous demand for a robot that, in case the robot travelling in an indoor space acquires map data corresponding to a new area, identifies whether the map data is correct map data, and that determines whether to update the map.

WO 2020041817 A1 discloses an autonomous mobile robot for the new exploration of an area.

### [Detailed Description of the Invention]

### [Technical Task]

The disclosure is for addressing the aforementioned need, and the purpose of the disclosure is in providing a robot that determines whether to update the stored map data based on a comparison result between the stored map data and newly acquired map data, and a controlling method thereof.

### [Technical Solution]

The present invention is set out in the appended set of claims.

A robot according to one or more embodiments of the disclosure for achieving the aforementioned purpose may include a memory storing first map data corresponding to a first region of a specific space, a distance sensor, and a processor configured to, based on acquiring second map data on the basis of distance data acquired by the distance sensor while the robot is travelling in the specific space, compare the first map data and the second map data, and based on identifying, as a result of the comparison, that an error does not exist in the second map data and information on a second region other than the first region is included in the second map data, update the first map data on the basis of the second map data.

Here, the processor may, based on identifying that the second region is a region wherein a plurality of sub regions are clustered and the size of the second region is greater than or equal to a threshold size, update the first map data on the basis of the second map data.

Here, the memory may store travelling history information of the robot, and the processor may, based on identifying that the robot has a history of travelling in the second region on the basis of the travelling history information of the robot, update the first map data on the basis of the second map data.

Meanwhile, the processor may identify a first location corresponding to the current location of the robot based on the first map data, identify a second location corresponding to the current location of the robot based on the second map data, based on a distance between the first location and the second location being smaller than a threshold distance, identify that an error does not exist in the second map data, and based on the distance between the first location and the second location being greater than or equal to the threshold distance, identify that an error exists in the second map data.

Also, the processor may compare first line information included in the first map data and second line information included in the second map data, and identify whether an error exists in the second map data based on the result of comparison.

Here, the processor may acquire first histogram information based on angle information of lines included in the first map data, acquire second histogram information based on angle information of lines included in the second map data, based on similarity between the first histogram information and the second histogram information being smaller than a threshold value, identify that an error does not exist in the second map data, and based on the similarity between the first histogram information and the second histogram information being greater than or equal to the threshold value, identify that an error exists in the second map data.

Meanwhile, the processor may, based on identifying, on the basis of the first map data and the second map data, that a boundary line between the first region and the second region is greater than or equal to a threshold length, update the first map data on the basis of the second map data.

Also, the robot may further include a display, and the processor may control the display to display a UI inquiring about whether to update the first map data on the basis of the second map data, and based on receiving a user instruction requesting update of the first map data, update the first map data on the basis of the second map data.

In addition, the robot may further include a communication interface, and the processor may control the communication interface to transmit the updated first map data to an external server.

Meanwhile, a controlling method of a robot storing first map data corresponding to a first region of a specific space according to one or more embodiments of the disclosure may include the steps of, based on acquiring second map data while the robot is travelling in the specific space, comparing the first map data and the second map data, and based on identifying, as a result of the comparison, that an error does not exist in the second map data and information on a second region other than the first region is included in the second map data, updating the first map data on the basis of the second map data.

Here, in the updating step, based on identifying that the second region is a region wherein a plurality of sub regions are clustered and the size of the second region is greater than or equal to a threshold size, the first map data may be updated on the basis of the second map data.

Here, in the updating step, based on identifying that the robot has a history of travelling in the second region on the basis of the travelling history information of the robot, the first map data may be updated on the basis of the second map data.

Meanwhile, the comparing step may include the steps of identifying a first location corresponding to the current location of the robot based on the first map data, identifying a second location corresponding to the current location of the robot based on the second map data, based on a distance between the first location and the second location being smaller than a threshold distance, identifying that an error does not exist in the second map data, and based on the distance between the first location and the second location being greater than or equal to the threshold distance, identifying that an error exists in the second map data.

Also, in the comparing step, first line information included in the first map data and second line information included in the second map data may be compared, and it may be identified whether an error exists in the second map data based on the result of comparison.

Here, the comparing step may include the steps of acquiring first histogram information based on angle information of lines included in the first map data, acquiring second histogram information based on angle information of lines included in the second map data, based on similarity between the first histogram information and the second histogram information being smaller than a threshold value, identifying that an error does not exist in the second map data, and based on the similarity between the first histogram information and the second histogram information being greater than or equal to the threshold value, identifying that an error exists in the second map data.

Meanwhile, in the updating step, based on identifying, on the basis of the first map data and the second map data, that a boundary line between the first region and the second region is greater than or equal to a threshold length, the first map data may be updated on the basis of the second map data.

Also, the controlling method may further include the steps of displaying a UI inquiring about whether to update the first map data on the basis of the second map data, and based on receiving a user instruction requesting update of the first map data, updating the first map data on the basis of the second map data.

In addition, the controlling method may further include the step of transmitting the updated first map data to an external server.

Meanwhile, a non-transitory computer-readable recording medium storing a computer instruction making the robot perform an operation in case the instruction is executed by the processor of the robot according to one or more embodiments of the disclosure may include the steps of, based on acquiring second map data while the robot is travelling in the specific space, comparing the first map data and the second map data, and based on identifying, as a result of the comparison, that an error does not exist in the second map data and information on a second region other than the first region is included in the second map data, updating the first map data on the basis of the second map data.

### [Effect of the Invention]

According to the various embodiments of the disclosure, a robot can acquire map data with high credibility, and thus the quality of a service provided based on the map data can be enhanced, and accordingly, the user's convenience can be improved.

### [BRIEF DESCRIPTION OF THE DRAWINGS]

FIG. 1 is a diagram for illustrating a robot travelling in an indoor space;
FIG. 2 is a diagram for illustrating a configuration of a robot according to one or more embodiments of the disclosure;
FIG. 3 is a diagram for illustrating an operation of a robot of determining whether a space is expanded according to one or more embodiments of the disclosure;
FIG. 4 is a diagram for illustrating an operation of a robot of determining whether a space is expanded based on travelling history information according to one or more embodiments of the disclosure;
FIG. 5 is a diagram for illustrating determination of whether to update a map after re-recognition of a location according to one or more embodiments of the disclosure;
FIG. 6 is a diagram for illustrating determination of whether to update a map based on line information according to one or more embodiments of the disclosure;
FIG. 7 is a diagram for illustrating an operation of a robot of displaying a UI according to one or more embodiments of the disclosure;
FIG. 8 is a diagram for illustrating in detail a functional configuration of a robot according to one or more embodiments of the disclosure;
FIG. 9 is a flow chart for illustrating a map update process based on a user's update request according to one or more embodiments of the disclosure; and
FIG. 10 is a flow chart for illustrating a controlling method according to one or more embodiments of the disclosure.

### [Mode for Implementing the Invention]

Hereinafter, the disclosure will be described in detail with reference to the accompanying drawings.

As terms used in the embodiments of the disclosure, general terms that are currently used widely were selected as far as possible, in consideration of the functions described in the disclosure. However, the terms may vary depending on the intention of those skilled in the art, previous court decisions, or emergence of new technologies, etc. Also, in particular cases, there may be terms that were arbitrarily designated by the applicant, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in the disclosure, expressions such as "have," "may have," "include," and "may include" denote the existence of such characteristics (e.g.: elements such as numbers, functions, operations, and components), and do not exclude the existence of additional characteristics.

In addition, the expression "at least one of A and/or B" should be interpreted to mean any one of "A" or "B" or "A and B."

Further, the expressions "first," "second," and the like used in the disclosure may be used to describe various elements regardless of any order and/or degree of importance. Also, such expressions are used only to distinguish one element from another element, and are not intended to limit the elements.

In addition, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Meanwhile, singular expressions include plural expressions, unless defined obviously differently in the context. Also, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

In addition, in the disclosure, "a module" or "a part" performs at least one function or operation, and may be implemented as hardware or software, or as a combination of hardware and software. Also, a plurality of "modules" or a plurality of "parts" may be integrated into at least one module and implemented as at least one processor (not shown), except "a module" or "a part" that needs to be implemented as specific hardware.

Further, in the disclosure, the term "user" may refer to a person who is provided with a route guiding service from a robot.

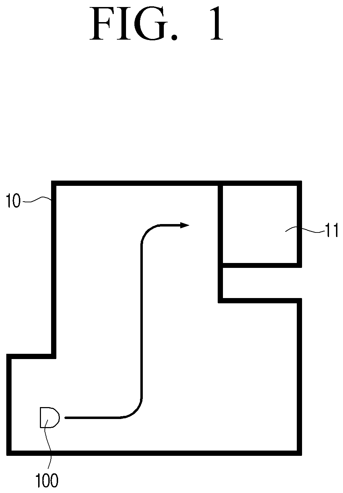

FIG. 1 is a diagram for illustrating a robot travelling in an indoor space.

According to FIG. 1, a robot 100 according to one or more embodiments of the disclosure may provide a service to a user while travelling in a specific space 10. For example, the robot 100 may provide a service of cleaning the space 10, but is not limited thereto. The robot 100 may store in advance map data corresponding to the space 10 for travelling in the space 10, and the map data may include information on at least one of a wall surface region (occupied), a free region (free space), or an unidentified region (unknown) constituting the space 10. Here, the unidentified region may mean the remaining region excluding the wall surface region and the free region, but is not limited thereto.

Here, the map data may include information on a plurality of sub regions, and the sub regions may be regions divided in grid units, but are not limited thereto. In case the sub regions are regions divided in grid units, the map data may include information on a plurality of grids corresponding to one region among the wall surface region, the free region, or the unidentified region.

Also, the space 10 may include an independent region 11 having a plurality of wall surface regions as its boundary. In this case, at least one wall surface region corresponding to the region 11 may include an entrance of the region 11. In case all of the entrances of the region 11 are in a closed state, the map data stored in the robot 100 may not include information on the region 11.

However, in case the entrance of the region 11 is changed to an open state, the robot 100 may acquire map data corresponding to the region 11. In this case, the robot 100 may update the previously stored map data based on the acquired map data. Hereinafter, various embodiments of determining whether to update the stored data based on a comparison result of the stored map data and newly acquired map data will be described in more detail.

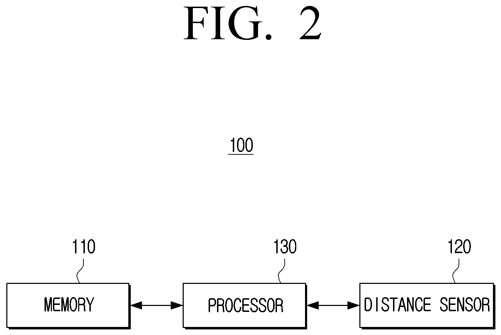

FIG. 2 is a diagram for illustrating a configuration of a robot according to one or more embodiments of the disclosure.

According to FIG. 2, the robot 100 may include a memory 110, a distance sensor 120, and a processor 130.

The memory 110 may store data necessary for the various embodiments of the disclosure. The memory 110 may be implemented in the form of a memory embedded in the robot 100, or implemented as a memory that can be attached to or detached from the robot 100, according to the usage of stored data. For example, in the case of data for operating the robot 100, the data may be stored in a memory embedded in the robot 100, and in the case of data for an extended function of the robot 100, the data may be stored in a memory that can be attached to or detached from the robot 100. Meanwhile, in the case of a memory embedded in the robot 100, the memory may be implemented as at least one of a volatile memory (e.g.: a dynamic RAM (DRAM), a static RAM (SRAM), or a synchronous dynamic RAM (SDRAM), etc.) or a non-volatile memory (e.g.: an one time programmable ROM (OTPROM), a programmable ROM (PROM), an erasable and programmable ROM (EPROM), an electrically erasable and programmable ROM (EEPROM), a mask ROM, a flash ROM, a flash memory (e.g.: NAND flash or NOR flash, etc.), a hard drive, or a solid state drive (SSD)). Also, in the case of a memory that can be attached to or detached from the robot 100, the memory may be implemented in forms such as a memory card (e.g., compact flash (CF), secure digital (SD), micro secure digital (Micro-SD), mini secure digital (Mini-SD), extreme digital (xD), a multi-media card (MMC), etc.), an external memory that can be connected to a USB port (e.g., a USB memory), etc.

Also, the memory 110 according to one or more embodiments may store first map data corresponding to a partial region (a first region) of a space wherein the robot 100 is travelling.

The distance sensor 120 may acquire distance data. Specifically, the distance sensor 120 may measure a distance between the location of the robot 100 and the location of an object, and acquire distance data based on the measurement result. The distance sensor 120 according to one or more embodiments may be implemented as a Light Detection And Ranging (LIDAR) sensor or a Time of flight (TOF) sensor, but is not limited thereto.

The processor 130 controls the overall operations of the robot 100. Specifically, the processor 130 may be connected with each component of the robot 100, and control the overall operations of the robot 100. For example, the processor 130 may be connected with the memory 110 and the distance sensor 120, and control the operations of the robot 100.

According to one or more embodiments, the processor 130 may be referred to as various names such as a digital signal processor (DSP), a microprocessor, a central processing unit (CPU), a micro controller unit (MCU), a micro processing unit (MPU), a neural processing unit (NPU), a controller, an application processor (AP), etc., but it is described as the processor 130 in this specification.

The processor 130 may be implemented as a system on chip (SoC) or large scale integration (LSI), or in the form of a field programmable gate array (FPGA). Also, the processor 130 may include a volatile memory such as an SRAM, etc.

The processor 130 may acquire new map data (second map data) based on distance data acquired by the distance sensor 120 while the robot 100 is travelling in a specific space. Here, the second map data may include all or a part of information on the first region corresponding to the first map data, but it may not include information on the first region depending on the travelling route of the robot 100. According to an embodiment, the second map data may be data in a form wherein information on the second region is added to the first map data.

Here, the first region and the second region may be regions including a sub region corresponding to a free region included in the space, and in particular, the second region may include regions of the user that can be always occupied (e.g.: a room, a living room, etc.) among regions that can be travelled by the robot 100.

Also, when the second map data is acquired, the processor 130 may compare the first map data and the second map data stored in the memory 110. If it is identified, as a result of the comparison between the first map data and the second map data, that an error does not exist in the second map data, and information on a second region other than the first region corresponding to the first map data is included in the second map data, the processor 130 may update the first map data on the basis of the second map data.

Here, 'update' may mean an operation of adding information on the second region other than the first region corresponding to the first map data among the information included in the second map data to the first map data. However, in case the second map data includes the first map data, 'update' may mean an operation of replacing the first map data with the second map data.

In addition, if it is identified that the second region is a region wherein a plurality of sub regions are clustered and the size of the second region is greater than or equal to a threshold size, the processor 130 may update the first map data on the basis of the second map data. Here, the clustered region may mean a region that is formed as sub regions corresponding to the second region included in the second map data are clustered in a specific form. For example, the clustered region may mean a region having a rectangular form, but is not limited thereto.

According to an embodiment, in order that the robot 100 can determine whether the second region is a clustered region, the memory 110 may store a neural network model. In this case, the processor 130 may input the second map data into the neural network model, and output information on at least one clustered region.

That is, even if information on the second region not included in the first map data is included in the second map data, the processor 130 may determine that the second region is in a specific form, and also, there is substantial expansion of the space only in case the second region is a region having an area that is greater than or equal to a specific size, and update the first map data on the basis of the second map data.

Also, the memory 110 may store information on a travelling history of the robot 100. In this case, if it is identified that the robot 100 has a history of travelling in the second region on the basis of the travelling history information of the robot 100, the processor 130 may update the first map data on the basis of the second map data.

In addition, the processor 130 may identify a first location corresponding to the current location of the robot 100 based on the first map data, and identify a second location corresponding to the current location of the robot 100 based on the second map data, and if a distance between the first location and the second location is smaller than a threshold distance, the processor 130 may identify that an error does not exist in the second map data. In contrast, if the distance between the first location and the second location is greater than or equal to the threshold distance, the processor 130 may identify that an error exists in the second map data.

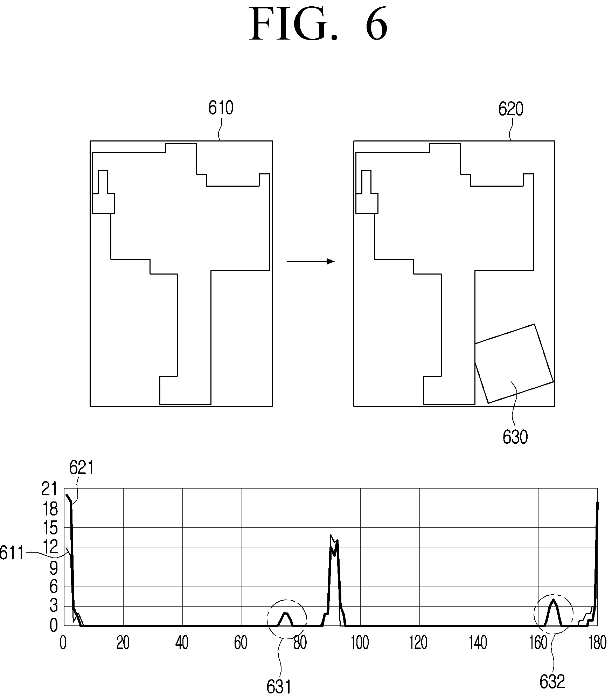

Further, the processor 130 may compare first line information included in the first map data and second line information included in the second map data, and identify whether an error exists in the second map data based on the result of comparison. Here, the line information may be information acquired based on the information on the wall surface region included in the map data, but is not limited thereto, and a detailed content in this regard will be explained in detail with reference to FIG. 6 that will be described below.

Also, the processor 130 may acquire first histogram information based on angle information of lines included in the first map data, and acquire second histogram information based on angle information of lines included in the second map data.

If similarity between the first histogram information and the second histogram information is smaller than a threshold value, the processor 130 may identify that an error does not exist in the second map data, and if the similarity between the first histogram information and the second histogram information is greater than or equal to the threshold value, the processor 130 may identify that an error exists in the second map data. A detailed content in this regard will also be explained in detail with reference to FIG. 6 that will be described below.

Also, if it is identified, on the basis of the first map data and the second map data, that a boundary line between the first region and the second region is greater than or equal to a threshold length, the processor 130 may update the first map data on the basis of the second map data.

In addition, the robot 100 may further include a display, and the processor 130 may control the display to display a UI inquiring about whether to update the first map data on the basis of the second map data. Also, if a user instruction requesting update of the first map data is received, the processor 130 may update the first map data on the basis of the second map data.

Also, the robot 100 may further include a communication interface, and the processor 130 may control the communication interface to transmit the updated first map data to an external server.

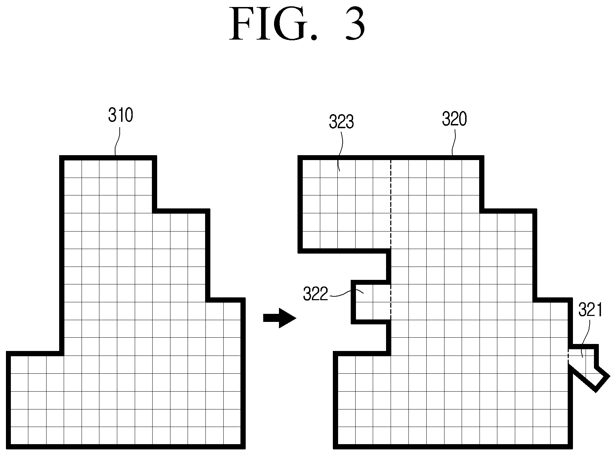

FIG. 3 is a diagram for illustrating an operation of a robot of determining whether a space is expanded according to one or more embodiments of the disclosure.

According to FIG. 3, the robot 100 may store first map data corresponding to a first region 310 of a specific space. Also, the robot 100 may acquire second map data including information on second regions 321, 322, 323 that are additionally identified while travelling in the specific space. In case an error does not exist in the second map data, the robot 100 may identify whether information on the second regions is included in the second map data.

The robot 100 may determine whether to update the map data based on at least one of whether the second regions are regions wherein a plurality of sub regions are clustered, whether the size of the second regions is greater than or equal to a threshold size, or whether a boundary line between the first region and the second region is greater than or equal to a threshold length.

According to FIG. 3, in the expanded space 320, the independent three second regions 321, 322, 323 may be included. If it is identified that at least one second region is a region wherein a plurality of sub regions are clustered, and the size of the second region is greater than or equal to a threshold size, the robot 100 according to an embodiment may update the first map data on the basis of the second map data.

First, the robot 100 may identify a region wherein sub regions (grids) having a predetermined specification are clustered. For example, the clustered region may include structured regions such as rectangular forms, and the robot 100 may identify an amorphous region 321 as an unclustered region, and identify the other structured regions 322, 323 as clustered regions.

Also, the robot 100 may identify a region of which size is greater than or equal to the threshold size in the clustered region. For example, the robot 100 may identify a region 323 including 10 or more sub regions (grids) as a region of which size is greater than or equal to the threshold size, and identify a region 322 including fewer than 10 sub regions (grids) as a region of which size is smaller than the threshold size.

Accordingly, the robot 100 may determine that an amorphous region or a region of which size is smaller than the threshold size is a noise, but not a region that was identified as the space was substantially expanded, and identify only the region 323 which is a structured region and of which size is greater than or equal to the threshold size as a region that was additionally identified compared to the previous first region 310, and update the first map data based on the information on the region 323.

Meanwhile, the robot 100 may determine that a region of which boundary line between the first region 310 is smaller than the threshold length such as the amorphous region 321 is a noise, but not a region that was identified as the space was extended, and may not reflect the information on the region 321 in an update process of the first map data.

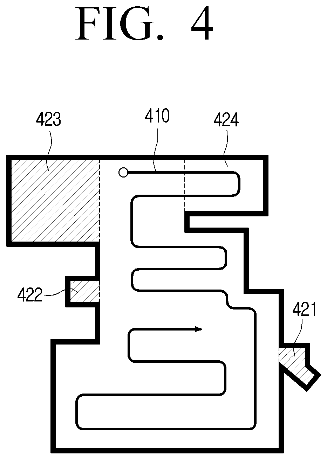

FIG. 4 is a diagram for illustrating an operation of a robot of determining whether a space is expanded based on travelling history information according to one or more embodiments of the disclosure.

The robot 100 may store travelling history information of the robot 100. Here, the travelling history information may include information on a route 410 by which the robot 100 travelled in a space in a process of providing a service in the past.

The robot 100 may update the first map data based on the travelling history information of the robot 100. Specifically, the robot 100 may identify regions 423, 424 that are regions wherein a plurality of sub regions are clustered, and of which sizes are greater than or equal to the threshold size at the same time, among regions 421, 422, 423, 424 that were additionally identified while the robot 100 was travelling other than the first region included in the first map data. Also, the robot 100 may identify a region 424 wherein there is a history that the robot 100 travelled from among the regions 423, 424 identified based on the past travelling route 410 of the robot 100 included in the travelling history information, and update the first map data based on the information on the region 424.

That is, the robot 100 may identify the region 423 wherein there is no history that the robot 100 travelled as a region that is not directly related to service provision by the robot (e.g.: a bathroom, a balcony) even though it is a region that was additionally identified according to expansion of the space, and may not reflect the information on the region 423 in an update process of the first map data.

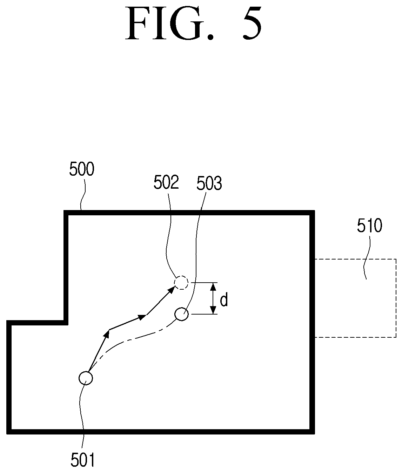

FIG. 5 is a diagram for illustrating determination of whether to update a map after re-recognition of a location according to one or more embodiments of the disclosure.

According to FIG. 5, the robot 100 may depart from the previous location 501 and travel in the first region 500. Also, the processor 130 may identify the current location of the robot 100 within the first region 500. Specifically, the processor 130 may identify the current location of the robot 100 through two kinds of methods.

First, the processor 130 may identify a first location 502 corresponding to the current location of the robot 100 based on the speed data of the robot 100 per unit time and the first map data. For example, the processor 130 may identify the first location 502 based on the speed data of the robot 100 corresponding to the unit time (one second) and the first map data while the robot 100 is travelling during three seconds from the previous location 501.

Secondly, the processor 130 may identify a second location 503 corresponding to the current location of the robot 100 based on the second map data. According to FIG. 5, the processor 130 may acquire the second map data including information on the second region 510 based on the distance data acquired by the distance sensor 120 after the robot 100 travelled during three seconds from the previous location 501. Also, the processor 130 may identify the second location 503 corresponding to the current location of the robot in the second map data.

In case the location of the robot 100 was identified incorrectly, the second map data acquired based on the location may include information on a region in a form wherein a region included in the first map data moved in parallel to a specific direction. Thus, the processor 130 may identify the distance d between the first location 502 and the second location 503, and if the identified distance d is smaller than a threshold distance, the processor 130 may identify that an error does not exist in the second map data, and update the first map data based on the information on the second region 510 included in the second map data.

That is, in case the assumed location 502 based on the speed data and the assumed location 503 based on distance sensing is different by a specific level or more, the robot 100 may determine that an error exists in the second map data, and may not update the first map data even though there is the second region 510 that was newly identified in the second map data.

FIG. 6 is a diagram for illustrating determination of whether to update a map based on line information according to one or more embodiments of the disclosure.

According to FIG. 6, the processor 130 may compare the first map data 610 stored in the memory 110 and the second map data 620 acquired based on the distance data acquired by the distance sensor 120. Specifically, the processor 130 may compare first line information included in the first map data 610 and second line information included in the second map data 620, and identify whether an error exists in the second map data 620 based on the result of comparison.

For example, the processor 130 may acquire first histogram information 611 based on angle information of lines included in the first map data 610, and acquire second histogram information 621 based on angle information of lines included in the second map data 620. Also, if similarity between the first histogram information 611 and the second histogram information 621 is smaller than a threshold value, the processor 130 may identify that an error does not exist in the second map data 620, and update the first map data 610 on the basis of the second map data 620.

According to FIG. 6, in the second histogram information 621, information 631, 632 on the second region 630 newly identified in the second map data 620 may be included. In case the robot 100 acquired the map data corresponding to the second region 630 incorrectly, the second region 630 identified as a warped region may include lines corresponding to the angle information 631, 632 other than the angle information within a threshold range based on 90 degrees or 180 degrees unlike the lines included in the first region.

In this case, in the second histogram information 621, the angle information 631, 632 within the threshold range based on 90 degrees or 180 degrees may be included, unlike the first histogram information 611. In case the number of the lines (or the ratio of the lines) corresponding to the information 631, 632 is greater than or equal to a threshold value, the processor 130 according to an embodiment may identify that an error exists in the second map data 620, and may not update the first map data 610.

That is, through an operation as above, the robot 100 may update the first map data 610 on the basis of the second map data 620 only in case the second region 630 newly identified in the second map data 620 was identified correctly without warping.

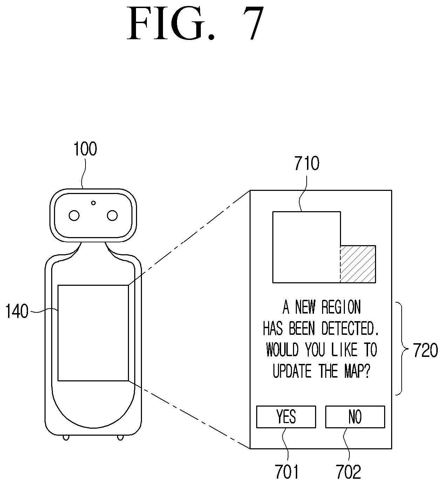

FIG. 7 is a diagram for illustrating an operation of a robot of displaying a UI according to one or more embodiments of the disclosure.

According to FIG. 7, the robot 100 may further include a display 140. The processor 130 may control the display 140 to display a UI 710 related to the second map data including the second region and a UI 720 inquiring about whether to update the first map data on the basis of the second map data.

For example, in case at least one of whether an error exists in the second map data or whether substantial expansion of the space was performed based on the second region included in the second map data was not identified clearly, the robot 100 may provide the UIs 710, 720 requesting a user instruction regarding whether to update to the user.

Also, the robot 100 may further include a user interface (not shown) that can receive input of the user, and the user interface according to an embodiment may include a touch sensor combined with the display 140, but is not limited thereto.

The user may select one of 'Yes 701' or 'No 702' through the user interface, and the processor 130 may identify whether there was an update request by the user based on the item selected by the user. In case it was identified that the user selected 'Yes 701,' the processor 130 may identify that a user instruction regarding an update request was received, and update the first map data on the basis of the second map data.

In contrast, in case it was identified that the user selected 'No 702' or the user did not make any choice within a threshold time, the processor 130 may identify that a user instruction regarding an update request was not received, and may not update the first map data.

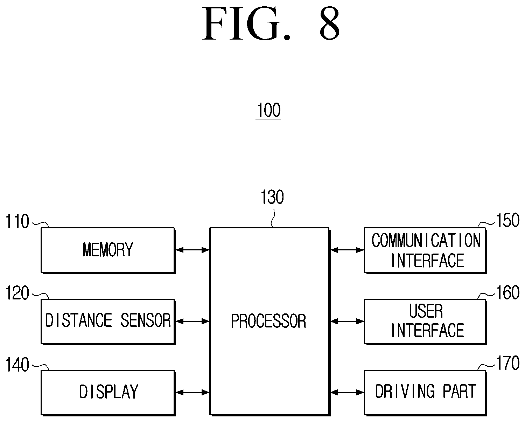

FIG. 8 is a diagram for illustrating in detail a functional configuration of a robot according to one or more embodiments of the disclosure.

According to FIG. 8, the robot 100 may include a memory 110, a distance sensor 120, a processor 130, a display 140, a communication interface 150, a user interface 160, and a driving part 170. Among the components illustrated in FIG. 8, regarding components that overlap with the components illustrated in FIG. 2, detailed explanation will be omitted.

The display 140 may be implemented as displays in various forms such as a liquid crystal display (LCD), an organic light emitting diodes (OLED) display, a quantum dot light-emitting diodes (QLED) display, a plasma display panel (PDP), etc. In the display 140, a driving circuit that may be implemented in forms such as a TFT, a low temperature poly silicon (LTPS) TFT, an organic TFT (OTFT), etc., and a backlight unit, etc. may also be included together. Meanwhile, the display 140 may be implemented as a flexible display, a 3D display, etc.

The communication interface 150 may input and output various types of data. For example, the communication interface 150 may transmit and receive various types of data with an external device (e.g., a source device), an external storage medium (e.g., a USB memory), and an external server (e.g., a web hard) through communication methods such as Wi-Fi based on AP (Wi-Fi, a wireless LAN network), Bluetooth, Zigbee, a wired/wireless local area network (LAN), a wide area network (WAN), Ethernet, IEEE 1394, a high-definition multimedia interface (HDMI), a universal serial bus (USB), a mobile high-definition link (MHL), Audio Engineering Society/European Broadcasting Union (AES/EBU), optical, coaxial, etc.

The processor 130 according to an embodiment may control the communication interface 150 to transmit the updated first map data to an external server.

The user interface 160 is a component that is involved in the robot 100's performing of an interaction with the user. For example, the user interface 160 may include at least one of a touch sensor, a motion sensor, a button, a jog dial, a switch, a microphone, or a speaker, but is not limited thereto.

The driving part 170 is a device that can make the robot 100 travel. The driving part 170 may adjust the travelling direction and the travelling speed according to control by the processor 130, and the driving part 170 according to an embodiment may include a driving force generation device that generates a driving force for the robot 100 to travel (e.g.: a gasoline engine, a diesel engine, a liquefied petroleum gas (LPG) engine, an electronic motor, etc. according to the used fuel (or the energy source), a steering device for adjusting the travelling direction (e.g.: manual steering, hydraulics steering, electronic control power steering (EPS), etc.), a travelling device that makes the robot 100 travel according to the driving force (e.g.: a wheel, a propeller, etc.). Here, the driving part 170 may be implemented in modified forms according to the travelling type (e.g.: a wheel type, a walking type, a flying type, etc.) of the robot 100.

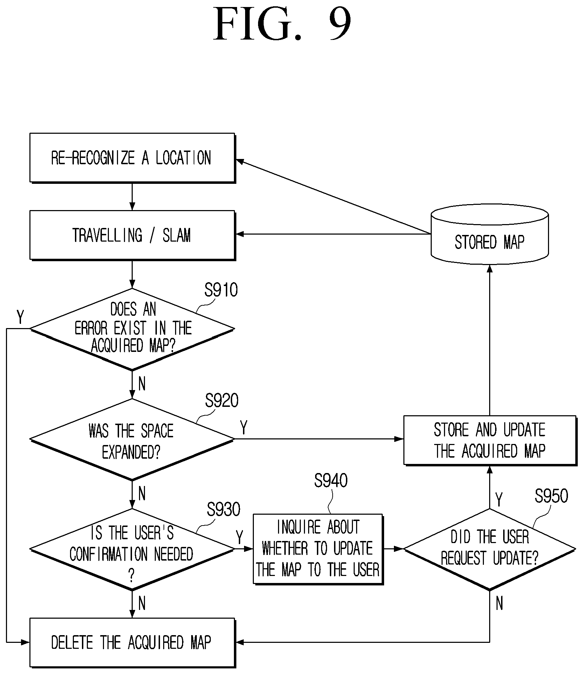

FIG. 9 is a flow chart for illustrating a map update process based on a user's update request according to one or more embodiments of the disclosure.

According to FIG. 9, the robot 100 may re-recognize the location of the robot 100 based on the first map data stored in the memory 110 and start travelling. According to an embodiment, in the travelling process, the robot 100 may acquire second map data based on distance data acquired through the distance sensor 120 through a simultaneous localization and mapping (SLAM) method, and determine whether an error exists in the acquired second map data in operation S910.

Here, in case it is identified that an error exists in the second map data in operation S910:Y, the robot 100 may determine to not update the first map data, and delete the acquired second map data.

In contrast, in case it is identified that an error does not exist in the second map data in operation S910:N, the robot 100 may identify whether the space that the robot 100 is travelling was substantially expanded based on the information on the second region included in the second map data. If it is identified that the second region is a region wherein a plurality of sub regions are clustered and the size of the second region is greater than or equal to a threshold size in operation S920:Y, the robot 100 according to an embodiment may store the second map data, and update the first map data on the basis of the second map data.

However, in case it is identified that the second region is not a clustered region, or even if the second region is a clustered region, the size of the second region is smaller than the threshold size in operation S920:N, the robot 100 may identify whether the user's confirmation regarding whether to update the first map data is needed in operation S930.

In case the robot 100 identifies that the user's confirmation is not needed in operation S930:N, the robot 100 may determine to not update the first map data, and delete the acquired second map data.

However, in case it is identified that the user's confirmation is needed in operation S930:Y, the robot 100 may display a UI inquiring about whether to update the first map data to the user in operation S940. Also, the robot 100 may identify whether a user instruction requesting update of the first map data was received in operation S950.

If a user instruction requesting update of the first map data is received in operation S950:Y, the robot 100 may store the second map data, and update the first map data on the basis of the second map data. In contrast, if a user instruction requesting update of the first map data is not received in operation S950:N, the robot 100 may determine to not update the first map data, and delete the acquired second map data.

It is obvious that the aforementioned operations of the robot 100 can repeatedly occur per specific cycle or whenever a specific event occurs.

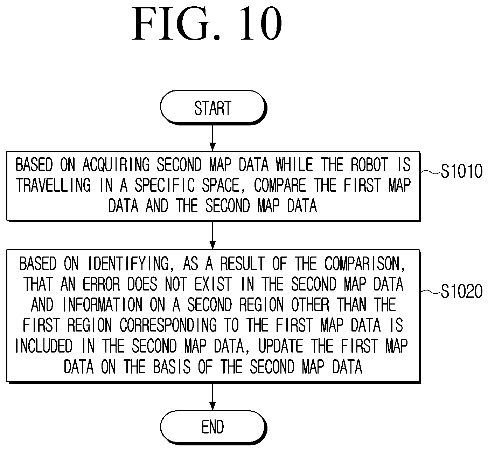

FIG. 10 is a flow chart for illustrating a controlling method according to one or more embodiments of the disclosure.

In the controlling method according to one or more embodiments of the disclosure, if second map data is acquired while the robot travels in a specific space, the first map data and the second map data are compared in operation S1010.

Then, if it is identified, as a result of the comparison, that an error does not exist in the second map data and information on a second region other than the first region corresponding to the first map data is included in the second map data, the first map data is updated on the basis of the second map data in operation S1020.

Here, in the updating operation S1020, if it is identified that the second region is a region wherein a plurality of sub regions are clustered and the size of the second region is greater than or equal to a threshold size, the first map data may be updated on the basis of the second map data.

Here, in the updating operation S1020, if it is identified that the robot has a history of travelling in the second region on the basis of the travelling history information of the robot, the first map data may be updated on the basis of the second map data.

Also, the comparing operation S1010 may include the steps of identifying a first location corresponding to the current location of the robot based on the first map data, identifying a second location corresponding to the current location of the robot based on the second map data, based on a distance between the first location and the second location being smaller than a threshold distance, identifying that an error does not exist in the second map data, and based on the distance between the first location and the second location being greater than or equal to the threshold distance, identifying that an error exists in the second map data.

Also, in the comparing operation S1010, first line information included in the first map data and second line information included in the second map data may be compared, and it may be identified whether an error exists in the second map data based on the result of comparison.

Here, the comparing operation S1010 may include the steps of acquiring first histogram information based on angle information of lines included in the first map data, acquiring second histogram information based on angle information of lines included in the second map data, based on similarity between the first histogram information and the second histogram information being smaller than a threshold value, identifying that an error does not exist in the second map data, and based on the similarity between the first histogram information and the second histogram information being greater than or equal to the threshold value, identifying that an error exists in the second map data.

Meanwhile, in the updating operation S1020, based on identifying, on the basis of the first map data and the second map data, that a boundary line between the first region and the second region is greater than or equal to a threshold length, the first map data may be updated on the basis of the second map data.

Also, the controlling method may further include the steps of displaying a UI inquiring about whether to update the first map data on the basis of the second map data, and based on receiving a user instruction requesting update of the first map data, updating the first map data on the basis of the second map data.

In addition, the controlling method may further include the step of transmitting the updated first map data to an external server.

Meanwhile, methods according to the aforementioned various embodiments of the disclosure may be implemented in forms of applications that can be installed on conventional robots.

Also, the methods according to the aforementioned various embodiments of the disclosure may be implemented just with software upgrade, or hardware upgrade of conventional robots.

In addition, the aforementioned various embodiments of the disclosure may be performed through an embedded server provided on a robot, or at least one external server.

Meanwhile, the aforementioned various embodiments may be implemented in a recording medium that can be read by a computer or a device similar to a computer, by using software, hardware, or a combination thereof. In some cases, the embodiments described in this specification may be implemented as the processor 130 itself. According to implementation by software, the embodiments such as procedures and functions described in this specification may be implemented as separate software modules. Each of the software modules can perform one or more functions and operations described in this specification.

Meanwhile, computer instructions for performing processing operations of the robot 100 according to the aforementioned various embodiments of the disclosure may be stored in a non-transitory computer-readable medium. Computer instructions stored in such a non-transitory computer-readable medium make the processing operations at the robot 100 according to the aforementioned various embodiments performed by a specific machine, when the instructions are executed by the processor of the specific machine.

A non-transitory computer-readable medium refers to a medium that stores data semi-permanently, and is readable by machines, but not a medium that stores data for a short moment such as a register, a cache, and a memory. As specific examples of a non-transitory computer-readable medium, there may be a CD, a DVD, a hard disc, a blue-ray disc, a USB, a memory card, a ROM and the like.

## Claims

1. A robot (100) comprising:
a memory (110) storing first map data corresponding to a first region of a specific space;
a distance sensor (120); and
a processor (130) configured to:
based on acquiring second map data on the basis of distance data acquired by the distance sensor (120) while the robot (100) is travelling in the specific space, compare the first map data and the second map data, and
based on identifying, as a result of the comparison, that an error does not exist in the second map data and information on a second region other than the first region is included in the second map data, update the first map data on the basis of the second map data,
**characterized in that**
the second region is a region comprising a plurality of sub regions clustered in a specific form and the size of the second region is greater than or equal to a threshold size.

2. The robot (100) of claim 1,
wherein the memory (110) stores travelling history information of the robot (100), and
the processor (130) is configured to:
based on identifying that the robot (100) has a history of travelling in the second region on the basis of the travelling history information of the robot (100), update the first map data on the basis of the second map data.

3. The robot (100) of claim 1,
wherein the processor (130) is configured to:
identify a first location corresponding to the current location of the robot (100) based on the first map data,
identify a second location corresponding to the current location of the robot (100) based on the second map data,
based on a distance between the first location and the second location being smaller than a threshold distance, identify that an error does not exist in the second map data, and
based on the distance between the first location and the second location being greater than or equal to the threshold distance, identify that an error exists in the second map data.

4. The robot (100) of claim 1,
wherein the processor (130) is configured to:
compare first line information included in the first map data and second line information included in the second map data, and identify whether an error exists in the second map data based on the result of comparison.

5. The robot (100) of claim 4,
wherein the processor (130) is configured to:
acquire first histogram information based on angle information of lines included in the first map data,
acquire second histogram information based on angle information of lines included in the second map data,
based on similarity between the first histogram information and the second histogram information being smaller than a threshold value, identify that an error does not exist in the second map data, and
based on the similarity between the first histogram information and the second histogram information being greater than or equal to the threshold value, identify that an error exists in the second map data.

6. The robot (100) of claim 1,
wherein the processor (130) is configured to:
based on identifying, on the basis of the first map data and the second map data, that a boundary line between the first region and the second region is greater than or equal to a threshold length, update the first map data on the basis of the second map data.

7. The robot (100) of claim 1, further comprising:
a display,
wherein the processor (130) is configured to:
control the display to display a UI inquiring about whether to update the first map data on the basis of the second map data, and
based on receiving a user instruction requesting update of the first map data, update the first map data on the basis of the second map data.

8. The robot (100) of claim 1, further comprising:
a communication interface,
wherein the processor (130) is configured to:
control the communication interface to transmit the updated first map data to an external server.

9. A controlling method of a robot storing first map data corresponding to a first region of a specific space, the method comprising:
based on acquiring second map data while the robot is travelling in the specific space, comparing (S1010) the first map data and the second map data; and
based on identifying, as a result of the comparison, that an error does not exist in the second map data and information on a second region other than the first region is included in the second map data, updating (S1020) the first map data on the basis of the second map data,
**characterized in that**
the second region is a region comprising a plurality of sub regions clustered in a specific form and the size of the second region is greater than or equal to a threshold size.

10. The controlling method of claim 9,
wherein the updating comprises:
based on identifying that the robot has a history of travelling in the second region on the basis of the travelling history information of the robot, updating the first map data on the basis of the second map data.

11. The controlling method of claim 9,
wherein the comparing comprises:
identifying a first location corresponding to the current location of the robot based on the first map data;
identifying a second location corresponding to the current location of the robot based on the second map data;
based on a distance between the first location and the second location being smaller than a threshold distance, identifying that an error does not exist in the second map data; and
based on the distance between the first location and the second location being greater than or equal to the threshold distance, identifying that an error exists in the second map data.

12. The controlling method of claim 9,
wherein the comparing comprises:
comparing first line information included in the first map data and second line information included in the second map data, and identifying whether an error exists in the second map data based on the result of comparison.

13. The controlling method of claim 12,
wherein the comparing comprises:
acquiring first histogram information based on angle information of lines included in the first map data;
acquiring second histogram information based on angle information of lines included in the second map data;
based on similarity between the first histogram information and the second histogram information being smaller than a threshold value, identifying that an error does not exist in the second map data; and
based on the similarity between the first histogram information and the second histogram information being greater than or equal to the threshold value, identifying that an error exists in the second map data.

## Patentansprüche

1. Roboter (100), umfassend:
einen Speicher (110), der erste Kartendaten speichert, die einem ersten Bereich eines spezifischen Raums entsprechen;
einen Abstandssensor (120); und
einen Prozessor (130), der konfiguriert ist zum:
basierend auf dem Erfassen von zweiten Kartendaten auf der Grundlage von Abstandsdaten, die vom Abstandssensor (120) erfasst werden, während sich der Roboter (100) in dem spezifischen Raum bewegt, Vergleichen der ersten Kartendaten und der zweiten Kartendaten, und
basierend auf dem Identifizieren, als Ergebnis des Vergleichs, dass kein Fehler in den zweiten Kartendaten vorliegt und Informationen über einen zweiten Bereich, der nicht der erste Bereich ist, in den zweiten Kartendaten enthalten sind, Aktualisieren der ersten Kartendaten auf der Grundlage der zweiten Kartendaten,
**dadurch gekennzeichnet, dass** der zweite Bereich ein Bereich ist, der eine Vielzahl von Unterbereichen umfasst, die in einer spezifischen Form geclustert sind und die Größe des zweiten Bereichs größer oder gleich einem Schwellenwert ist.

2. Roboter (100) nach Anspruch 1,
wobei der Speicher (110) Fahrtverlaufsinformationen des Roboters (100) speichert, und
der Prozessor (130) konfiguriert ist zum:
basierend auf dem Identifizieren, dass der Roboter (100) einen Verlauf von Fahrten im zweiten Bereich aufweist, auf der Grundlage der Fahrtverlaufsinformation des Roboters (100), Aktualisieren der ersten Kartendaten auf der Grundlage der zweiten Kartendaten.

3. Roboter (100) nach Anspruch 1,
wobei der Prozessor (130) konfiguriert ist zum:
Identifizieren eines ersten Standorts, der dem aktuellen Standort des Roboters (100) entspricht, basierend auf den ersten Kartendaten,
Identifizieren eines zweiten Standorts, der dem aktuellen Standort des Roboters (100) entspricht, basierend auf den zweiten Kartendaten,
basierend darauf, dass ein Abstand zwischen dem ersten Standort und dem zweiten Standort kleiner als ein Schwellenwert ist, Identifizieren, dass kein Fehler in den zweiten Kartendaten vorliegt, und
basierend darauf, dass der Abstand zwischen dem ersten Standort und dem zweiten Standort größer oder gleich dem Schwellenwert ist, Identifizieren, dass ein Fehler in den zweiten Kartendaten vorliegt.

4. Roboter (100) nach Anspruch 1,
wobei der Prozessor (130) konfiguriert ist zum:
Vergleichen erster Linieninformationen, die in den ersten Kartendaten enthalten sind, und zweiter Linieninformationen, die in den zweiten Kartendaten enthalten sind, und basierend auf dem Vergleichsergebnis Identifizieren, ob in den zweiten Kartendaten ein Fehler vorliegt.

5. Roboter (100) nach Anspruch 4,
wobei der Prozessor (130) konfiguriert ist zum:
Erfassen erster Histogramminformationen basierend auf Winkelinformationen von in den ersten Kartendaten enthaltenen Linien,
Erfassen zweiter Histogramminformationen basierend auf Winkelinformationen von in den zweiten Kartendaten enthaltenen Linien,
basierend darauf, dass eine Ähnlichkeit zwischen den ersten Histogramminformationen und den zweiten Histogramminformationen kleiner als ein Schwellenwert ist, Identifizieren, dass kein Fehler in den zweiten Kartendaten vorliegt, und
basierend darauf, dass die Ähnlichkeit zwischen den ersten Histogramminformationen und den zweiten Histogramminformationen größer oder gleich dem Schwellenwert ist, Identifizieren, dass ein Fehler in den zweiten Kartendaten vorliegt.

6. Roboter (100) nach Anspruch 1,
wobei der Prozessor (130) konfiguriert ist zum:
basierend auf dem Identifizieren, auf der Grundlage der ersten Kartendaten und der zweiten Kartendaten, dass eine Grenzlinie zwischen dem ersten Bereich und dem zweiten Bereich größer oder gleich einer Schwellenwertlänge ist, Aktualisieren der ersten Kartendaten auf der Grundlage der zweiten Kartendaten.

7. Roboter (100) nach Anspruch 1, ferner umfassend:
eine Anzeige,
wobei der Prozessor (130) konfiguriert ist, um:
die Anzeige so zu steuern, dass eine UI angezeigt wird, die abfragt, ob die ersten Kartendaten auf der Grundlage der zweiten Kartendaten aktualisiert werden sollen, und
basierend auf dem Empfangen einer Benutzeranweisung, die eine Aktualisierung der ersten Kartendaten anfordert, die ersten Kartendaten auf der Grundlage der zweiten Kartendaten zu aktualisieren.

8. Roboter (100) nach Anspruch 1, ferner umfassend:
eine Kommunikationsschnittstelle,
wobei der Prozessor (130) konfiguriert ist, um:
die Kommunikationsschnittstelle zu steuern, um die aktualisierten ersten Kartendaten an einen externen Server zu übertragen.

9. Verfahren zum Steuern eines Roboters, der erste Kartendaten speichert, die einem ersten Bereich eines spezifischen Raumes entsprechen, wobei das Verfahren umfasst:
basierend auf dem Erfassen von zweiten Kartendaten, während sich der Roboter in dem spezifischen Raum bewegt, Vergleichen (S1010) der ersten Kartendaten und der zweiten Kartendaten; und
basierend auf dem Identifizieren, als Ergebnis des Vergleichs, dass in den zweiten Kartendaten kein Fehler vorliegt und Informationen über einen zweiten Bereich, der nicht der erste Bereich ist, in den zweiten Kartendaten enthalten sind, Aktualisieren (S1020) der ersten Kartendaten auf der Grundlage der zweiten Kartendaten,
**dadurch gekennzeichnet, dass** der zweite Bereich ein Bereich ist, der eine Vielzahl von Unterbereichen umfasst, die in einer spezifischen Form geclustert sind, und dass die Größe des zweiten Bereichs größer als oder gleich einem Schwellenwert ist.

10. Steuerungsverfahren nach Anspruch 9,
wobei das Aktualisieren umfasst:
basierend auf dem Identifizieren, dass der Roboter einen Verlauf von Fahrten im zweiten Bereich aufweist, auf der Grundlage der Fahrtverlaufsinformation des Roboters, Aktualisieren der ersten Kartendaten auf der Grundlage der zweiten Kartendaten.

11. Steuerungsverfahren nach Anspruch 9,
wobei das Vergleichen umfasst:
Identifizieren eines ersten Standortes, der dem aktuellen Standort des Roboters entspricht, basierend auf den ersten Kartendaten;
Identifizieren eines zweiten Standortes, der dem aktuellen Standort des Roboters entspricht, basierend auf den zweiten Kartendaten;
basierend darauf, dass ein Abstand zwischen dem ersten Standort und dem zweiten Standort kleiner als ein Schwellenwert ist, Identifizieren, dass kein Fehler in den zweiten Kartendaten vorliegt; und
basierend darauf, dass der Abstand zwischen dem ersten Standort und dem zweiten Standort größer oder gleich dem Schwellenwert ist, Identifizieren, dass ein Fehler in den zweiten Kartendaten vorliegt.

12. Steuerungsverfahren nach Anspruch 9,
wobei das Vergleichen umfasst:
Vergleichen erster Linieninformationen, die in den ersten Kartendaten enthalten sind, und zweiter Linieninformationen, die in den zweiten Kartendaten enthalten sind, und basierend auf dem Vergleichsergebnis Identifizieren, ob in den zweiten Kartendaten ein Fehler vorliegt.

13. Steuerungsverfahren nach Anspruch 12,
wobei das Vergleichen umfasst:
Erfassen erster Histogramminformationen basierend auf Winkelinformationen der in den ersten Kartendaten enthaltenen Linien;
Erfassen zweiter Histogramminformationen basierend auf den Winkelinformationen der in den zweiten Kartendaten enthaltenen Linien;
basierend darauf, dass eine Ähnlichkeit zwischen den ersten Histogramminformationen und den zweiten Histogramminformationen kleiner als ein Schwellenwert ist, Identifizieren, dass kein Fehler in den zweiten Kartendaten vorliegt; und
basierend darauf, dass die Ähnlichkeit zwischen den ersten Histogramminformationen und den zweiten Histogramminformationen größer oder gleich dem Schwellenwert ist, Identifizieren, dass ein Fehler in den zweiten Kartendaten vorliegt.

## Revendications

1. Robot (100), comprenant :
une mémoire (110) stockant des premières données cartographiques correspondant à une première région d'un espace spécifique ;
un capteur de distance (120) ; et
un processeur (130) configuré pour :
en se basant sur l'acquisition de deuxièmes données cartographiques sur la base de données de distance acquises par le capteur de distance (120) pendant que le robot (100) se déplace dans l'espace spécifique, comparer les premières données cartographiques et les deuxièmes données cartographiques, et
en se basant sur l'identification, comme résultat de la comparaison, qu'il n'y a pas d'erreur dans les deuxièmes données cartographiques et que des informations sur une deuxième région autre que la première région sont incluses dans les deuxièmes données cartographiques, mettre à jour les premières données cartographiques sur la base des deuxièmes données cartographiques,
**caractérisé en ce que** la deuxième région est une région comprenant une pluralité de sous-régions regroupées sous une forme spécifique et la taille de la deuxième région est supérieure ou égale à une taille seuil.

2. Robot (100) de la revendication 1,
dans lequel la mémoire (110) stocke des informations d'historique de déplacements du robot (100), et
le processeur (130) est configuré pour :
en se basant sur l'identification du fait que le robot (100) a un historique de déplacement dans la deuxième région sur la base des informations d'historique de déplacement du robot (100), mettre à jour les premières données cartographiques sur la base des deuxièmes données cartographiques.

3. Robot (100) de la revendication 1,
dans lequel le processeur (130) est configuré pour :
identifier un premier lieu correspondant au lieu actuel du robot (100) en se basant sur les premières données cartographiques,
identifier un deuxième lieu correspondant au lieu actuel du robot (100) en se basant sur les deuxièmes données cartographiques,
en se basant sur le fait qu'une distance entre le premier lieu et le deuxième lieu est inférieure à une distance seuil, identifier qu'il n'y a pas d'erreur dans les deuxièmes données cartographiques, et
en se basant sur le fait que la distance entre le premier lieu et le deuxième lieu est supérieure ou égale à la distance seuil, identifier qu'une erreur existe dans les deuxièmes données cartographiques.

4. Robot (100) de la revendication 1,
dans lequel le processeur (130) est configuré pour :
comparer les premières informations de ligne incluses dans les premières données cartographiques et les deuxièmes informations de ligne incluses dans les deuxièmes données cartographiques, et identifier si une erreur existe dans les deuxièmes données cartographiques en se basant sur le résultat de la comparaison.

5. Robot (100) de la revendication 4,
dans lequel le processeur (130) est configuré pour :
acquérir des premières informations d'histogramme sur la base d'informations d'angle de lignes incluses dans les premières données cartographiques,
acquérir des deuxièmes informations d'histogramme sur la base d'informations d'angle des lignes incluses dans les deuxièmes données cartographiques,
en se basant sur la similarité entre lés premières informations d'histogramme et les deuxièmes informations d'histogramme étant inférieure à une valeur seuil, identifier qu'il n'y a pas d'erreur dans les deuxièmes données cartographiques, et
en se basant sur la similarité entre les premières informations d'histogramme et les deuxièmes informations d'histogramme étant supérieure ou égale à la valeur seuil, identifier qu'une erreur existe dans les deuxièmes données cartographiques.

6. Robot (100) de la revendication 1,
dans lequel le processeur (130) est configuré pour :
en se basant sur l'identification, sur la base des premières données cartographiques et des deuxièmes données cartographiques, qu'une ligne de délimitation entre la première région et la deuxième région est supérieure ou égale à une longueur seuil, mettre à jour les premières données cartographiques sur la base des deuxièmes données cartographiques.

7. Robot (100) de la revendication 1, comprenant en outre :
un affichage,
dans lequel le processeur (130) est configuré pour :
commander l'affichage d'une UI demandant s'il faut mettre à jour les premières données cartographiques sur la base des deuxièmes données cartographiques, et
en se basant sur la réception d'une instruction d'utilisateur demandant la mise à jour des premières données cartographiques, mettre à jour les premières données cartographiques sur la base des deuxièmes données cartographiques.

8. Robot (100) de la revendication 1, comprenant en outre :
une interface de communication,
dans lequel le processeur (130) est configuré pour :
commander l'interface de communication pour transmettre les premières données cartographiques mises à jour à un serveur externe.

9. Procédé de commande d'un robot stockant des premières données cartographiques correspondant à une première région d'un espace spécifique, le procédé comprenant :
en se basant sur l'acquisition de deuxièmes données cartographiques pendant que le robot se déplace dans l'espace spécifique, comparer (S1010) les premières données cartographiques et les deuxièmes données cartographiques ; et
en se basant sur l'identification, comme résultat de la comparaison, qu'il n'y a pas d'erreur dans les deuxièmes données cartographiques et que des informations sur une deuxième région autre que la première région sont incluses dans les deuxièmes données cartographiques, mettre à jour (S 1020) les premières données cartographiques sur la base des deuxièmes données cartographiques,
**caractérisé en ce que** la deuxième région est une région comprenant une pluralité de sous-régions regroupées sous une forme spécifique et que la taille de la deuxième région est supérieure ou égale à une taille seuil.

10. Procédé de commande de la revendication 9,
dans lequel la mise à jour comprend :
en se basant sur l'identification du fait que le robot a un historique de déplacement dans la deuxième région sur la base des informations d'historique de déplacement du robot, mettre à jour les premières données cartographiques sur la base des deuxièmes données cartographiques.

11. Procédé de commande de la revendication 9,
dans lequel la comparaison comprend :
identifier un premier lieu correspondant au lieu actuel du robot en se basant sur les premières données cartographiques,
identifier un deuxième lieu correspondant au lieu actuel du robot en se basant sur les deuxièmes données cartographiques,
en se basant sur le fait que la distance entre le premier lieu et le deuxième lieu est inférieure ou égale à la distance seuil, identifier qu'il n'y a pas d'erreur dans les deuxièmes données cartographiques ; et
en se basant sur le fait que la distance entre le premier lieu et le deuxième lieu est supérieure ou égale à la distance seuil, identifier qu'une erreur existe dans les deuxièmes données cartographiques.

12. Procédé de commande de la revendication 9,
dans lequel la comparaison comprend :
comparer les premières informations de ligne incluses dans les premières données cartographiques et les deuxièmes informations de ligne incluses dans les deuxièmes données cartographiques, et identifier si une erreur existe dans les deuxièmes données cartographiques en se basant sur le résultat de la comparaison.

13. Procédé de commande de la revendication 12,
dans lequel la comparaison comprend :
acquérir des premières informations d'histogramme sur la base d'informations d'angle de lignes incluses dans les premières données cartographiques ;
acquérir des deuxièmes informations d'histogramme sur la base d'informations d'angle des lignes incluses dans les deuxièmes données cartographiques ;
en se basant sur la similarité entre lés premières informations d'histogramme et les deuxièmes informations d'histogramme étant inférieure à une valeur seuil, identifier qu'il n'y a pas d'erreur dans les deuxièmes données cartographiques ; et
en se basant sur la similarité entre les premières informations d'histogramme et les deuxièmes informations d'histogramme étant supérieure ou égale à la valeur seuil, identifier qu'une erreur existe dans les deuxièmes données cartographiques.
